# EUROPEAN PATENT SPECIFICATION

(11) **EP 3 299 279 B1**
(45) Date of publication and mention of the grant of the patent: **17.10.2018**
(21) Application number: 16203012.6
(22) Date of filing: 08.12.2016
(51) Int. Cl.: B64C 3/56, B64C 29/00, B64C 39/02, B64D 35/04, B64D 27/14

(54) **AIRCRAFT WITH A FUSELAGE-MOUNTED ENGINE AND WING STOW**
FLUGZEUG MIT TRIEBWERK IM RUMPF UND FLÜGELVERSTAUUNG
AERONEF AVEC UN MOTEUR MONTÉ DANS LE FUSELAGE ET UNE AILE ESCAMOTABLE

(30) Priority: 21.09.2016 US 201615272141; 21.09.2016 US 201615271721
(43) Date of publication of application: 28.03.2018
(73) Proprietor: Bell Helicopter Textron Inc., Fort Worth, TX 76101 (US)
(72) Inventor: IVANS, Steven Ray, Ponder, TX Texas 76259 (US); ROSS, Brent Chadwick, Flower Mound, TX Texas 75022 (US)
(74) Representative: Barker Brettell LLP

(56) References cited:
- WO-A1-2010/104509
- WO-A1-2011/018697
- WO-A1-2013/015295
- WO-A2-2009/102739
- KR-B1- 100 822 366
- US-A- 2 289 224
- US-A- 2 623 713
- US-A- 3 063 660
- US-A- 3 430 894
- US-A- 4 691 878
- US-A- 5 337 974

## Description

### BACKGROUND

In some cases, mounting an engine of an aircraft within a fuselage can be desirable to simplify rotor pylon and nacelle configuration, reduce space constraints, and/or reduce aircraft moment of inertia for improved maneuverability. In some cases, it can also be desirable to provide for stowing of an aircraft by rotating wings and/or folding wing extensions. However, providing an engine in a fuselage combined with rotating wings and/or folding wing extensions has remained a technical challenge.

US4691878A describes a mechanism and method for folding the wing of a tilt-rotor aircraft, having a rotatable load bearing member cooperatively disposed between a high point of the fuselage and the tilt-rotor wing, and a plurality of locking, load bearing pin joints disposed between the fuselage and the tilt-rotor wing, concentric to the rotatable load bearing member. US3430894A describes an aircraft having vertical take-off and landing capabilities with free-floating, tilting wings being controlled by means of pilot actuated wing tabs and having tilted propellers that pivot relative to the aircraft and wings.

WO2011/018697A1 describes a convertiplane having a fuselage with a first axis; and two rotors having respective shafts and fitted to a wing having a fixed portion connected to the fuselage, and a movable portion which supports the rotors, is connected to the fixed portion to rotate about a second axis crosswise to the first axis and to the shafts of the rotors, and is formed in one piece defined by two half -wing located on opposite sides of the fixed portion and each supporting a respective rotor, and by an elongated member extending along the whole wing and connecting the two half-wings; the rotors being powered by a motor via a transmission comprising a transmission shaft connecting the shafts of the rotors and coaxial with the second axis.

WO2013/015295A1 describes a vertical takeoff and landing aircraft which takes off and lands vertically with the plane of rotation of a rotor facing to the lower side of a main wing and moves forward with the plane of rotation of the rotor facing to the back side of the main wing, the vertical takeoff and landing aircraft achieving a reduction in the length of a rotor shaft by a lightweight and simple structure. In this vertical takeoff and landing aircraft, the position of the center of gravity of the body of the aircraft is set in an area on the trailing edge side from the chord center of the main wing, a rotor shaft is extended downward from the position of the center of gravity, and the rotor shaft is rotated between a vertical attitude in which the leading end thereof faces to the lower side of the main wing and a horizontal attitude in which the leading end thereof faces to the trailing edge side of the main wing.

US5337974A describes an aircraft wing pivot structure which provides a flexible ring attached to the aircraft wing at flexible wing attachment points by spherical bearings. The ring is attached to the fuselage of the aircraft by pins fixed to the fuselage and fittings partially enclosing sliding shoes formed at the bottom edge of the ring to allow rotation of the wing. The wing is locked in the flight position by retractable pins connected to the primary fuselage attachment fittings. The ring is a unitary stainless structure which accepts wing strains induced by flight loads by flexing at the wing attachment points.

WO2009/102739A2 describes a twin-rotor side-by-side compound rotorcraft having a fuselage and variable incident wing assembly that pivots relative to fuselage. The aircraft also has landing gear assembly and a tail fin assembly. The variable incident wing assembly is pivotally attached to the fuselage, and includes wing members, engines fixedly mounted to the wing members or another area of the rotorcraft, and a mast attached at a fixed angle relative to the wing members.

KR10-0822366B1 describes a tilt rotor-wing aircraft including a pair of main wings, a pair of auxiliary wings, and a moving unit. The main wings are installed at a body. The auxiliary wings are movably coupled with the main wings and extend length of the main wings by being arranged in parallel to the main wings in a fixed wing mode. The moving unit moves the auxiliary wings. The auxiliary wing is coupled with a nacelle as one body. The moving unit tilts the nacelle. The tilt rotor-wing aircraft flies in the fixed mode to generate a thrust in a forward direction of the body and in a rotary mode to generate the thrust in a vertical direction to the body.

US2623713A describes an airplane comprising a fuselage, a fixed wing section extending rigidly from opposite sides of the fuselage, undercarriage elements and empennage structures. The wing structure includes structural elements such as a main spare and rear spar, as well as the skin structure. Folding wing tip panels are hingedly connected to the outer ends of the fixed wing section so as to hinge thereon about pivot devices between operative and folded positions.

US2289224A describes aircraft in which the outer wing portions are folded upwardly and inwardly about longitudinal axes into positions in which the outer wing panels overlie the center panels of the wing, and the wing tips are disposed in closely contiguous positions either above or adjacent to the central fuselage of the airplane.

US3063660A describes a folding wing aircraft with a hinge and shear rod construction between elevon sections which is continuous with the hinge fold of the parent wing and which permits the elevon to fold simultaneously with the wing. When the wing is extended the hinge automatically aligns and locks the elevon portions together whereby the elevon sections may be operated as a unit in flight by means of a single control attached to the inboard elevon section. The shear pin linkage acts to transfer shear forces between the split elevens while the hinge acts to align the sections.

WO2010/104509A1 describes a tiltrotor aircraft including a rotatable nacelle that supports a rotor assembly and is pivotally attached to the aircraft's fuselage. A wing extension attaches to an outboard section of the nacelle. The wing extension provides additional yaw control during helicopter mode and additional lift during airplane mode.

### SUMMARY OF THE INVENTION

According to a first aspect of the invention there is provided an aircraft, comprising: a wing; a pylon carried by the wing; at least one of a rotor system component and a drive system component disposed within the pylon; and a wing extension carried by the at least one of a rotor system component and drive system component; wherein the wing extension is foldable relative to the pylon to selectively reduce an overall space occupied by the aircraft.
In some embodiments the pylon may be rotatable relative to the wing. The wing extension may be connected to the at least one of a rotor system component and drive system component using a mount.
In some embodiments the at least one of a rotor system component and drive system component may comprise a proprotor gearbox.

In some embodiments the wing extension may be a dihedral wing extension.
In some embodiments a shape of the wing extension may be complementary to the pylon. The wing extension may be configured to selectively fold to a position at least partially located above the pylon. The wing extension may be configured to selectively fold to a position at least partially located below the pylon.
According to a second aspect of the invention there is provided a wing extension, comprising: a mount configured for connection to at least one of a rotor system component and drive system component carried by a pylon of an aircraft; a first hinge portion connected to the mount; a second hinge portion movably connected to the first hinge portion; a strut connected to the second hinge portion; and a skin carried by the strut.

In some embodiments the at least one of a rotor system component and drive system component may comprise a proprotor gearbox of the aircraft.

In some embodiments the wing extension may be a dihedral wing extension.

In some embodiments a shape of the wing extension may be complementary to the pylon. The wing extension may be configured to selectively fold to a position at least partially located above the pylon. The wing extension may be configured to selectively fold to a position at least partially located below the pylon.

Any feature or embodiment of any aspect described above may be combined with any of the other aspects of the invention.

### BRIEF DESCRIPTION OF THE DRAWINGS

Figure 1 is an oblique top right view of an aircraft according to the disclosure with the aircraft in a cruise configuration.
Figure 2 is a front view of the aircraft of Figure 1 in a cruise configuration.
Figure 3 is an oblique top right view of the aircraft of Figure 1 with the aircraft in a vertical takeoff and landing (VTOL) configuration.
Figure 4 is a front view of the aircraft of Figure 1 with the aircraft in a VTOL configuration.
Figure 5 is an oblique top right view of the aircraft of Figure 1 with the aircraft in a folded configuration.
Figure 6 is a front view of the aircraft of Figure 1 with the aircraft in a folded configuration.
Figure 7 is a top view of the aircraft of Figure 1 with the aircraft in a folded configuration.
Figure 8 is a partial oblique top right view of the aircraft of Figure 1 showing internal components of the aircraft.
Figure 9 is another oblique top right view of the aircraft of Figure 1 showing internal components of the aircraft.
Figure 10 is a partial schematic diagram of a drive system of the aircraft of Figure 1.
Figure 11 is another partial schematic diagram of a drive system of the aircraft of Figure 1.
Figure 12 is an oblique view of a wing extension of the aircraft of Figure 1 with the wing extension in a deployed configuration.
Figure 13 is a partial oblique view of the wing extension of Figure 12 with the wing extension in a folded configuration.
Figure 14 is a schematic diagram comparing the locations of the wing extension of Figure 12 in a folded configuration and in a deployed configuration.
Figure 15 is a partial right view of an aircraft according to an example implementation showing internal components of the aircraft.
Figure 16 is an oblique top right view of the aircraft of Figure 15 showing internal components of the aircraft.
Figure 17 is a right side view of an aircraft according to another example implementation with the aircraft in a flight configuration.
Figure 18 is a right side view of the aircraft of Figure 17 in a folded configuration.
Figure 19 is a front view of the aircraft of Figure 17 in a folded configuration.
Figure 20 is a right side schematic view of the aircraft of Figure 17 showing internal components of the aircraft.
Figure 21 is a partial schematic diagram of an alternative example implementation of a drive system.
Figure 22 is a partial schematic diagram of another alternative example implementation of a drive system.

### DETAILED DESCRIPTION

In the specification, reference may be made to the spatial relationships between various components and to the spatial orientation of various aspects of components as the devices are depicted in the attached drawings. However, as will be recognized by those skilled in the art after a complete reading of the present disclosure, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

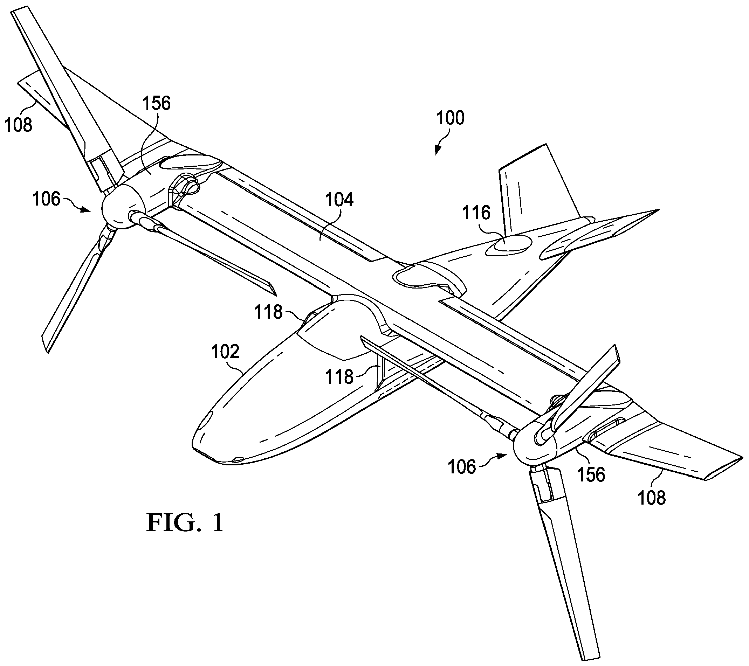

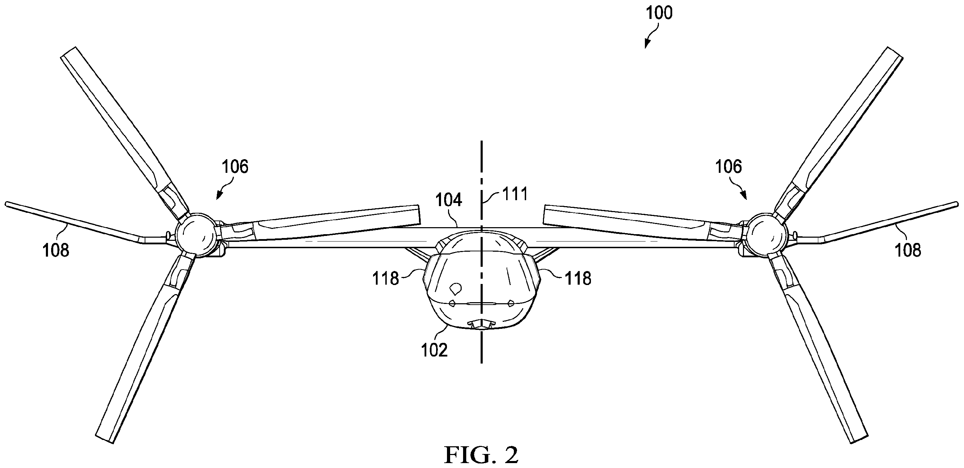

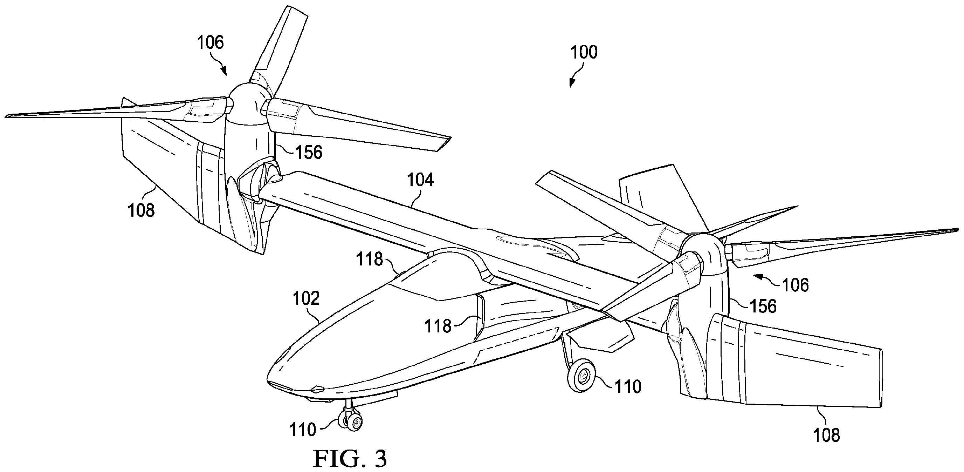

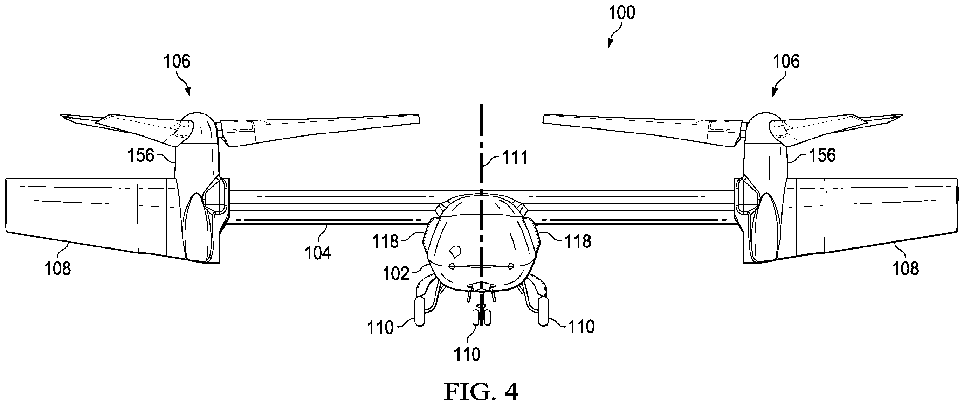

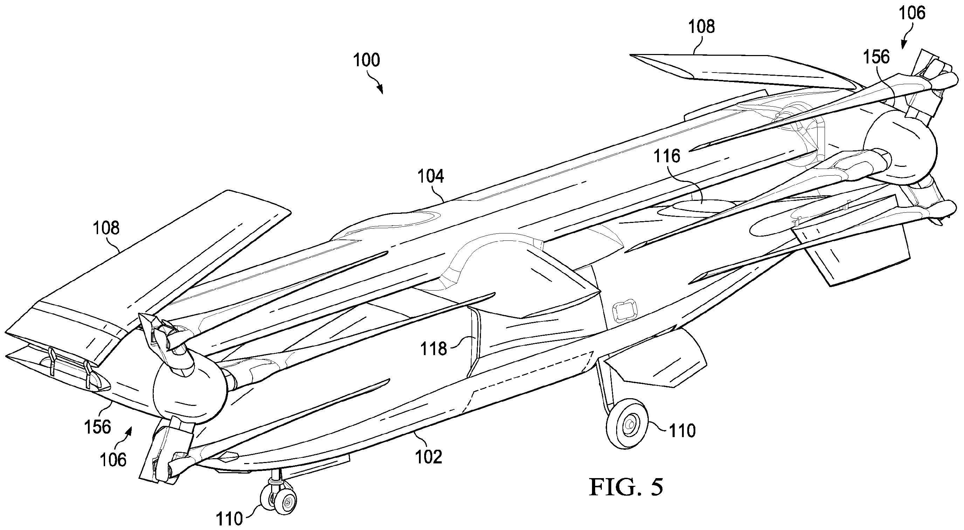

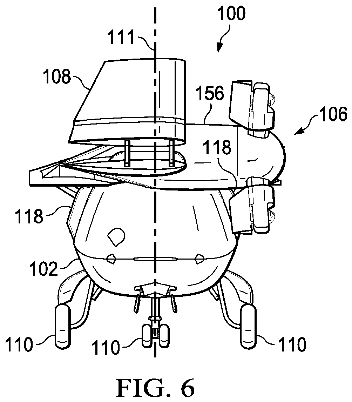

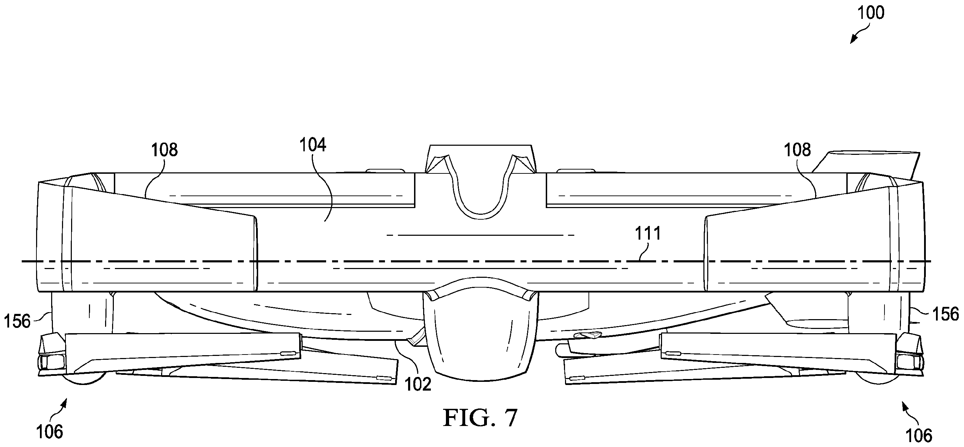

Referring to Figures 1-7 in the drawings, an aircraft 100 is illustrated. The aircraft 100 comprises a tiltrotor unmanned aerial vehicle (UAV). The aircraft 100 comprises a fuselage 102, a rotatable wing 104, rotor systems 106, foldable wing extensions 108, and landing gear 110. The aircraft 100 is generally operable in a cruise mode as shown in Figures 1 and 2 in which the aircraft 100 orients the rotor systems 106 and wing extensions 108 to allow flight in a manner substantially similar to a fixed wing aircraft. The aircraft 100 is also operable in a vertical takeoff and landing (VTOL) mode as shown in Figures 3 and 4 in which the aircraft 100 orients the rotor systems 106 and wing extensions 108 to allow vertical takeoff and landing in a manner substantially similar to a helicopter. In this embodiment, the aircraft 100 can also operate in a transition mode in which the rotors systems 106 and wing extensions 108 are oriented in positions between the positions shown in the cruise mode and the VTOL mode. While aircraft 100 is shown as comprising rotatable wings 104, alternative aircraft example implementations may not include rotatable wings 104 and/or wing extensions 108. More specifically, in some example implementations, an aircraft may be provided that comprises a fuselage mounted engine and rotatable wings but does not comprise wing extensions.

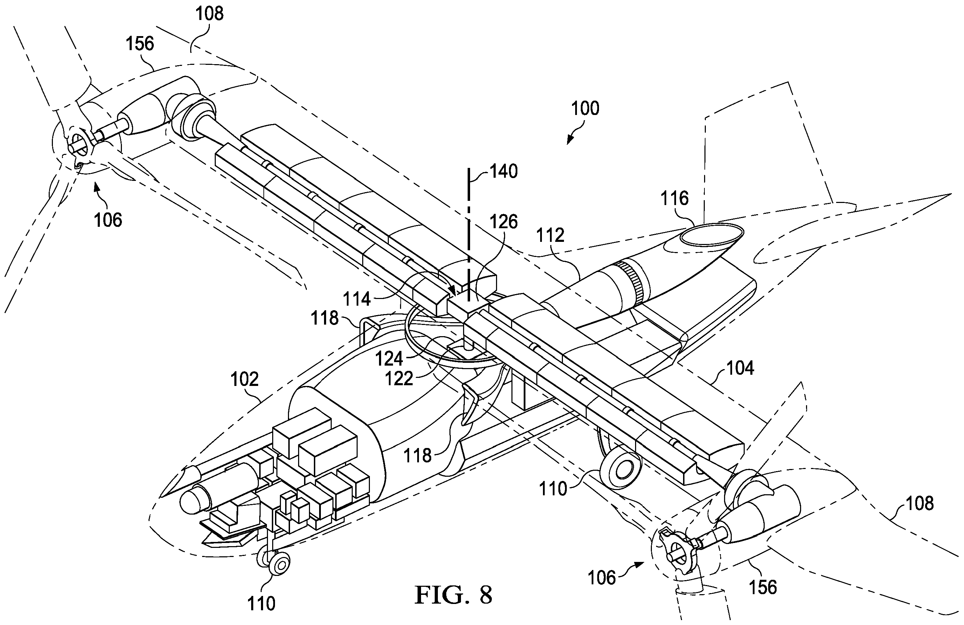

Referring now to Figures 8-10, 12, and 13, the aircraft 100 further comprises an engine 112 and an associated drive system 114 configured to drive the rotor systems 106. The engine 112 is disposed within the fuselage 102 and is disposed substantially symmetrically in the left-right direction about a zero butt line 111 of the aircraft 100. The zero butt line 111 generally bisects the aircraft 100 into left and right portions. The engine 112 is connected to a centrally located exhaust outlet 116 and two air intakes 118. Similar to the engine 112, the exhaust outlet 116 is disposed substantially symmetrically in the left-right direction about the zero butt line 111. However, while the air intakes 118 are not generally centrally located, the air intakes 118 are disposed in a substantially symmetric manner in the left-right direction about the zero butt line 111. The drive system 114 comprises an engine driveshaft 120 that extends from the engine 112 substantially forward toward the front of the aircraft 100. The engine driveshaft 120 is connected to a direction change gearbox 122 configured to connect the longitudinally extending engine driveshaft 120 to a riser shaft 124 that extends substantially vertically from the direction change gearbox 122. In this example implementation, the direction change gearbox 122 is configured to transfer rotary motion between the engine driveshaft 120 and the riser shaft 124 despite the right angle between the engine driveshaft 120 and the riser shaft 124. In some example implementations, the direction change gearbox 122 comprises components configured to provide a shaft speed reduction so that the speed of the riser shaft 124 is slower than the speed of the engine driveshaft 120. The drive system 114 further comprises a power splitting gearbox 126 configured to receive rotation from the riser shaft 124 and transfer rotary motion to each of two interconnect driveshafts 128 that drive the rotor systems 106.

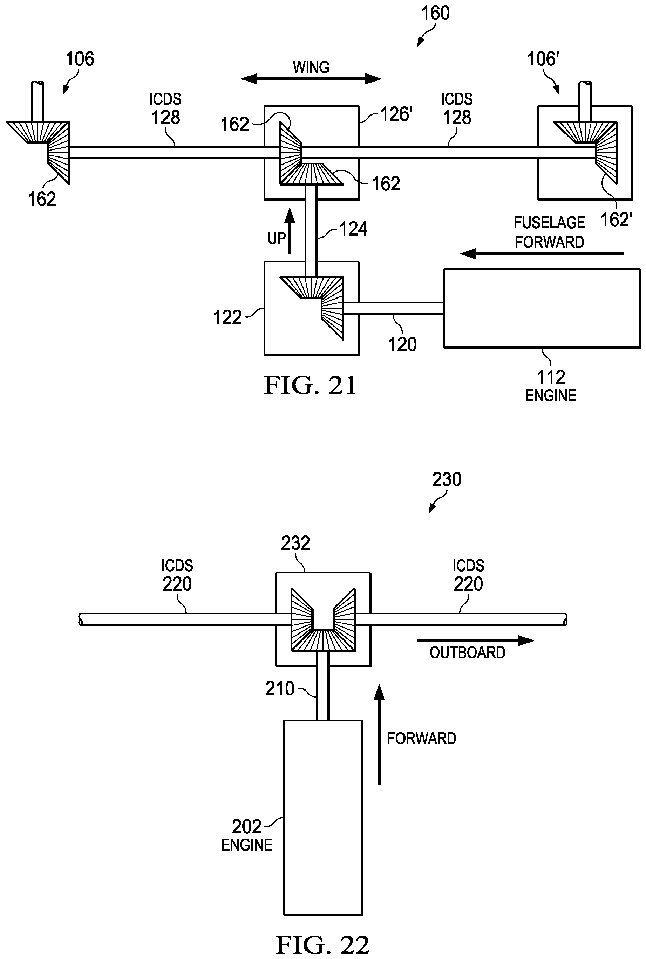

Referring now to Figure 21, an alternative example implementation of a drive system 160 is shown. The drive system 160 of Figure 21 is substantially similar to drive system 114. However, the power splitting gearbox 126' comprises only two spiral bevel gears 162 rather than three and the rotor system 106' is associated with a gearbox 164' that comprises a spiral bevel gear 162' that is driven from an opposite side as compared to the denoted spiral bevel gear 162 of the rotor system 106. Because this example implementation utilizes a single spiral bevel connection (using two spiral bevel gears) in the power splitting gearbox 126', the interconnect driveshafts 128 rotate in the same direction. Accordingly, the gearbox 164' serves to provide a change of rotational direction for the rotor system 106'.

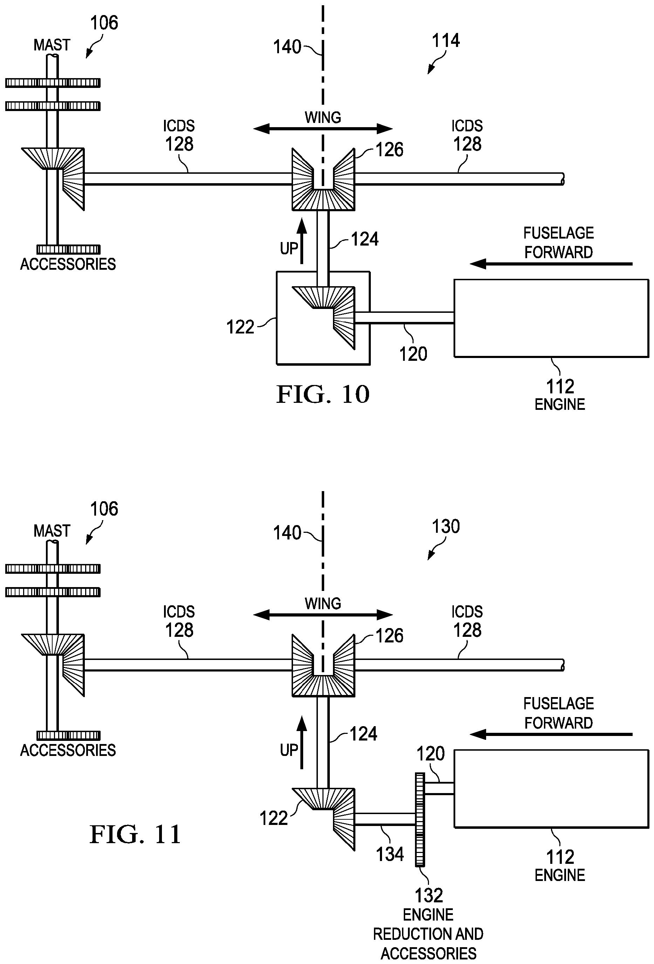

Referring now to Figure 11, another alternative example implementation of a drive system 130 is shown. The drive system 130 of Figure 11 is substantially similar to drive system 114, but further comprises engine reduction components and/or accessories 132 and an intermediate shaft 134 that are used to join the engine driveshaft 120 to the direction change gearbox 122.

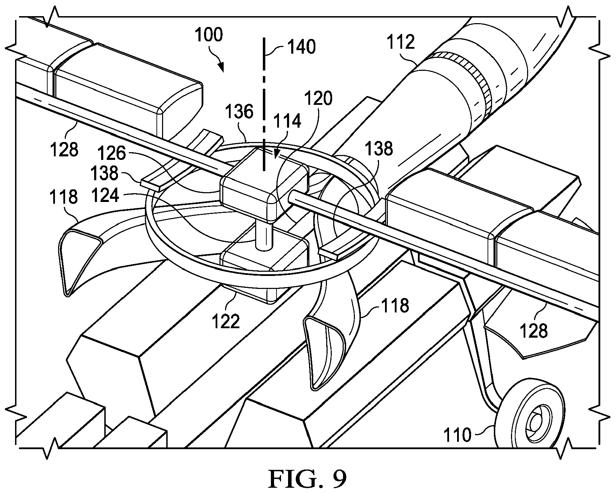

Referring back to Figures 8 and 9, the aircraft 100 further comprises a stow ring 136 that serves as a track and/or guide along which wing supports 138 can travel during rotation of the rotatable wing 104. In this example implementation, the rotatable wing 104 can rotate about a wing rotation axis 140 that is generally coincident with a central axis of the riser shaft 124.

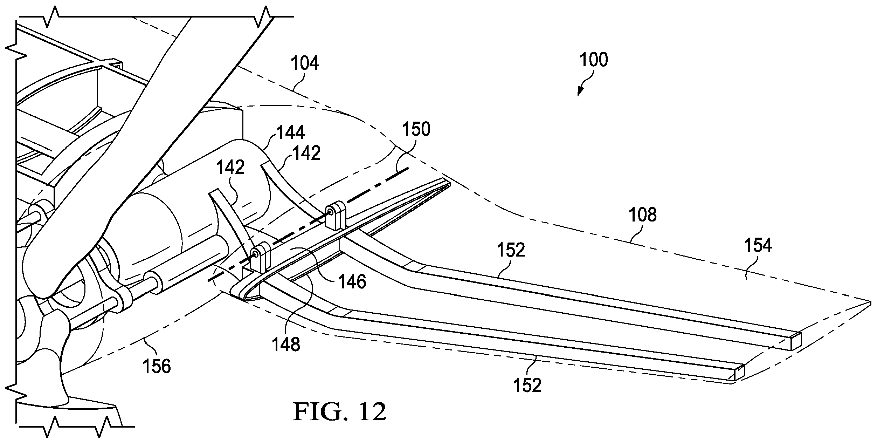

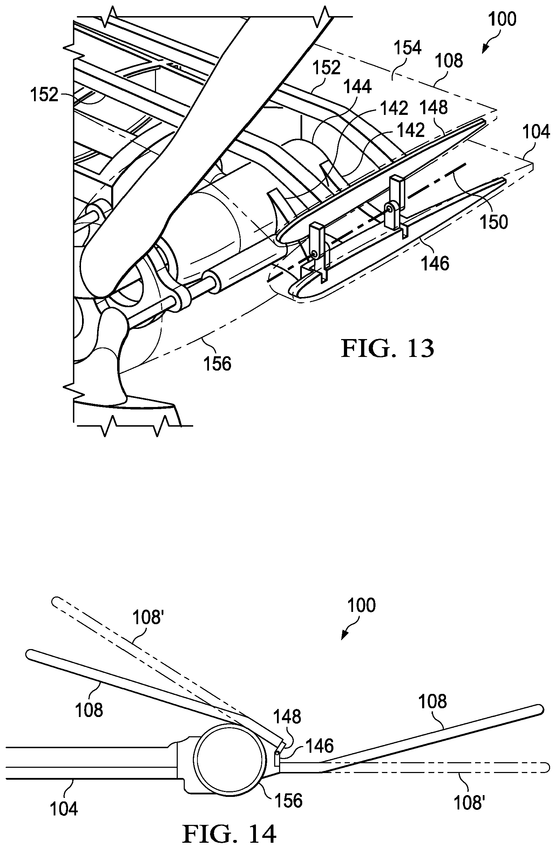

Referring now to Figures 12-14, the wing extension 108 is shown in greater detail. Most generally, the wing extension 108 comprises at least one mount 142 connected to a proprotor gearbox 144 associated with a rotor system 106, a first hinge portion 146 connected to the mounts 142, and a second hinge portion 148 movably connected to the first hinge portion 146 about a hinge axis 150. The wing extension 108 further comprises one or more struts 152 connected to the second hinge portion 148. The struts 152 generally provide structural support for a skin 154 of the wing extension 108. With reference to Figure 14, while the wing extension 108 comprises a dihedral configuration, in alternative embodiment, a wing extension 108' may comprise a straight configuration. As shown, in this embodiment, the dihedral shape of the wing extension 108 allows the wing extension to stow in a folded position so that the wing extension 108 can contact a pylon 156 carried by the wing 104 or other outer portion of wing 104 while fitting into a relatively smaller vertical and lateral envelope of space as compared to the straight wing extension 108'.

In some embodiments, the wing extensions 108 are provided to increase cruise efficiency without increasing rotor download excessively in hover, while still allowing the aircraft 100 the ability to fold and fit into confined spaces. The wing extensions 108 are generally horizontal when the aircraft 100 is in a cruise configuration. Because the wing extensions 108 are generally vertical in hover or VTOL configurations, the wing extensions 108 are generally streamline with the rotor system 106 thrust direction. The wing extension 108 does not attach directly to structural components of the wing 104, but rather, attach to components carried in the rotatable pylon 156. In alternative embodiments, wing extensions can comprise straight or anhedral shapes suitable for improved stowing. Further, in alternative embodiments, with differently shaped pylons 156 or other structures, the wing extensions can be shaped to complement the differently shaped pylons and/or structures so that the wing extensions nest against or otherwise abut the pylons and/or other structures in a space efficient manner when folded. In some embodiments, manual pinning and folding/unfolding of the wing extensions 108 can be utilized. However, in alternative embodiments, automated and/or automatic locking/unlocking and folding/unfolding may be utilized.

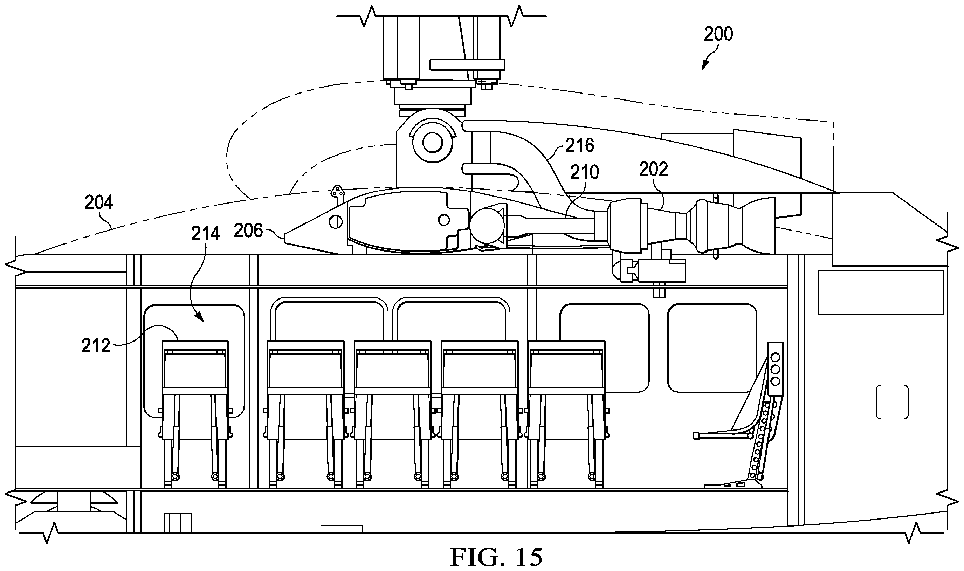

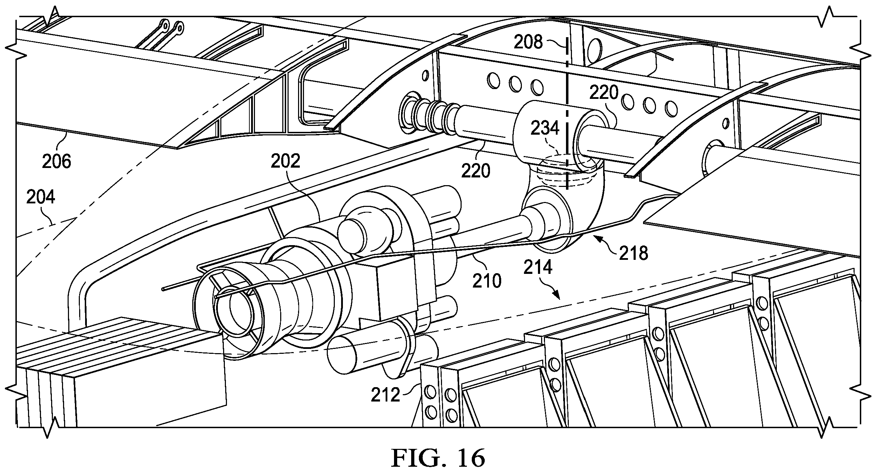

Referring now to Figures 15 and 16, an alternative example implementation of an aircraft 200 is shown. The aircraft 200 is substantially similar to aircraft 100 insofar as the aircraft 200 comprises an engine 202 disposed within a fuselage 204 in a symmetrical manner about a zero butt line, a rotatable wing 206 that rotates about a wing rotation axis 208, and an engine driveshaft 210 that extends forward from the engine 202 along the zero butt line. However, in this example implementation, the aircraft 200 is configured as a manned aircraft and comprises seats 212 and space within a cabin 214. In this example implementation, the engine 202 and driveshaft 210 are disposed above the cabin 214 but still within the fuselage 204. The aircraft 200 further comprises an air inlet duct 216 above the wing 206. Still further, the aircraft 200 comprises a spiral bevel gearset 218 that transfers power from the engine 202 to the interconnect driveshafts 220. At least a portion of the gearset 218 and/or associated shafts extends along the wing rotation axis 208.

Referring now to Figure 22, an alternative example implementation of a drive system 230 is shown that can be used in an aircraft substantially similar to the aircraft 200 but which does not include the rotational functionality of the rotatable wing 206. In such an example implementation, the engine 202 and associated driveshaft 210 may be substantially in-line and/or vertically aligned with the interconnect driveshafts 220 so that a single spiral bevel gearbox 232 can be used to join the driveshaft 210 to the interconnect driveshafts 220 without the use of a riser shaft, an
additional gearbox, and/or an additional spiral bevel (such as the spiral bevel gears 234 identified in Figure 16).

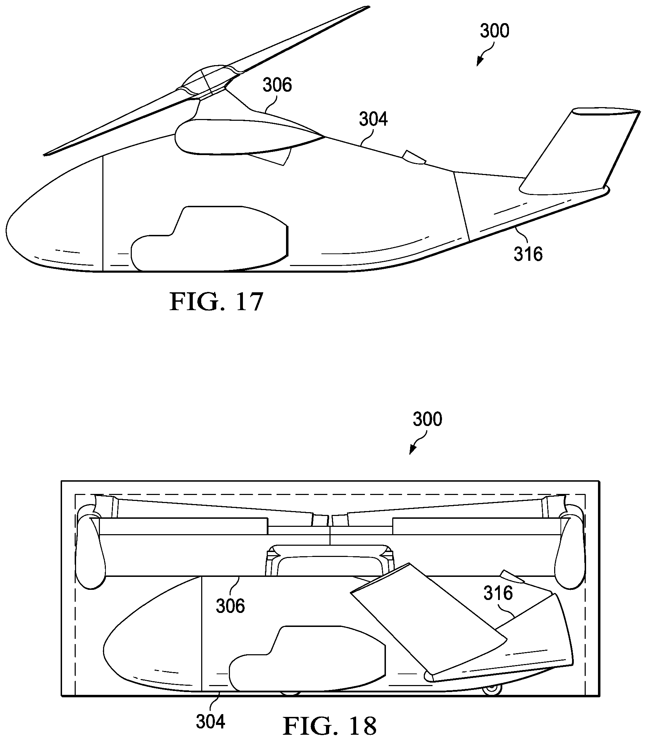

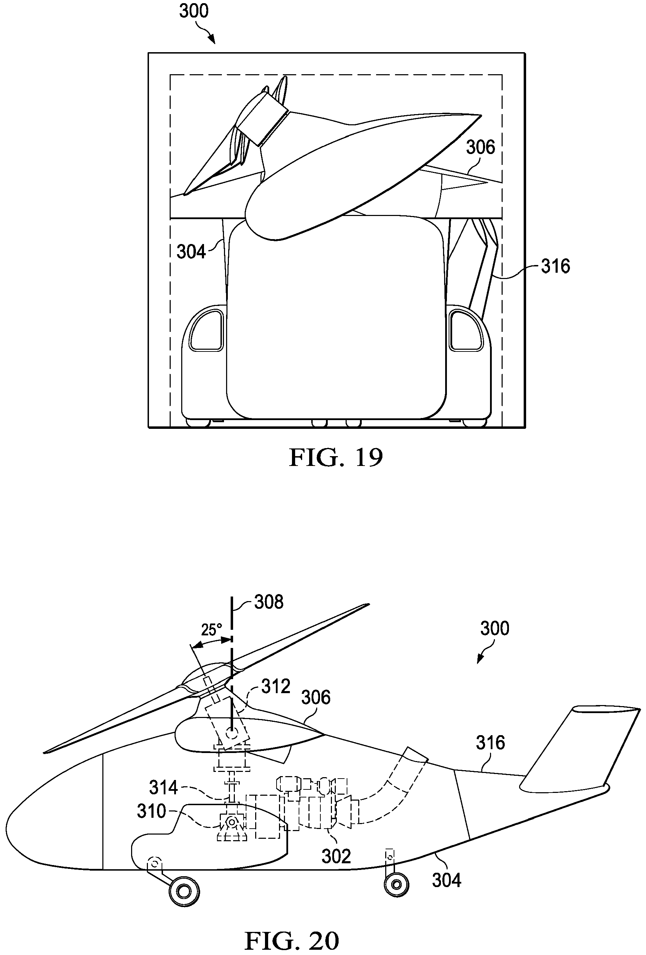

Referring now to Figures 17-20, an alternative example implementation of an aircraft 300 is shown. The aircraft 300 is substantially similar to aircraft 100 insofar as the aircraft 300 comprises an engine 302 disposed within a fuselage 304 in a symmetrical manner about a zero butt line, a rotatable wing 306 that rotates about a wing rotation axis 308, and an engine driveshaft that extends forward from the engine 302 along the zero butt line. However, in this example implementation, the aircraft 300 comprises a direction change gearbox 310 connected to a midwing spiral bevel gearbox 312 via a riser shaft 314. The gearbox 312 allows the wing 306 to rotate about the wing rotation axis 308 as well as to rotate up to about 25 degrees in a forward-backward rotation to allow transition between cruising and hovering modes of operation. At least a portion of the gearset 218 that drives the interconnect driveshafts 220 extends upward along the wing rotation axis 308. The aircraft 300 is generally configured to receive a joint modular intermodal container in a front portion of the fuselage 304 and the aircraft 300 is further configured to fit within a standard cargo container, such as, but not limited to a cargo container comprising a height of 96 inches, a width of 96 inches, and a depth of 240 inches. Still further, the tail 316 of the aircraft 300 is foldable.

While each of the aircraft 100, 200, 300 have unique features that are not shared with each other, some features are shared with each of the aircraft 100, 200, 300. Some of the shared features between aircraft 100, 200, 300 are that the wings 104, 204, 306 are rotatable about their respective wing rotation axes and that at least one component that drives the respective interconnect driveshaft is disposed along the respective wing rotation axis. By locating at least one of the shafts, gearboxes, spiral bevel gears, and/or other drive components along the wing axis of rotation, and in some example implementations centered within a stow ring, aircraft having both an engine disposed in the fuselage and a rotatable wing can be provided. In some
example implementations, the wing axis of rotation aligns with the engine driveshaft centerline and the engine output transitions directly to a 90 degree bevel box that provides speed reduction and transfers the power to a vertical riser shaft. The length of the vertical riser shaft can be selected to allow vertical alignment of an engine at various heights within the fuselage. In some example implementations, the riser shaft can connect to a dual spiral bevel gearbox that drives the interconnect drives shafts that drive the rotor systems. In some example implementations, an engine may first connect to a reduction gearbox that can also support power and hydraulic accessories. In some example implementations, a clutch can be provided in line with a spiral bevel, gearbox, and/or shaft to allow selective disengagement of the drive systems from the engine and to prevent rotation of the engines when rotating the wings about the wing axis of rotation.

At least one embodiment is disclosed and variations, combinations, and/or modifications of the embodiment(s) and/or features of the embodiment(s) made by a person having ordinary skill in the art are within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, Rₗ, and an upper limit, Rᵤ, is disclosed, any number falling within the range is specifically disclosed. In particular, the following numbers within the range are specifically disclosed: R=Rₗ +k * (Rᵤ-Rₗ), wherein k is a variable ranging from 1 percent to 100 percent with a 1 percent increment, i.e., k is 1 percent, 2 percent, 3 percent, 4 percent, 5 percent,...50 percent, 51 percent, 52 percent,..., 95 percent, 96 percent, 97 percent, 98 percent, 99 percent, or 100 percent. Moreover, any numerical range defined by two R numbers as defined in the above is also specifically disclosed. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow, that scope including all equivalents of the subject matter of the claims. Each and every claim is incorporated as further disclosure into the specification and the claims are embodiment(s) of the present invention.

## Claims

1. An aircraft (100), comprising:
a wing (104);
a pylon (156) carried by the wing (104);
at least one of a rotor system (106) component and a drive system (114) component disposed within the pylon (156); and
a wing extension (108) carried by the at least one of a rotor system (106) component and drive system (114) component;
wherein the wing extension (108) is foldable relative to the pylon (156) to selectively reduce an overall space occupied by the aircraft (100).

2. A wing extension (108), comprising:
a mount (142) configured for connection to at least one of a rotor system (106) component and drive system (114) component carried by a pylon (156) of an aircraft (100);
a first hinge portion (146) connected to the mount (142);
a second hinge portion (148) movably connected to the first hinge portion (146);
a strut (152) connected to the second hinge portion (148); and
a skin (154) carried by the strut (152).

3. The aircraft (100) of claim 1, wherein the pylon (156) is rotatable relative to the wing (104).

4. The aircraft (100) of claim 1 or claim 3, wherein the wing extension (108) is connected to the at least one of a rotor system (106) component and drive system (114) component using a mount (142).

5. The aircraft (100) of claim 4, wherein the at least one of a rotor system (106) component and drive system (114) component comprises a proprotor gearbox (144); or
the wing extension (108) of claim 2, wherein the at least one of a rotor system (106) component and drive system (114) component comprises a proprotor gearbox (144) of the aircraft (100).

6. The aircraft (100) of claim 5, wherein a first hinge portion (146) is connected to the mount (142), and optionally or preferably wherein a second hinge portion (148) is connected between the wing extension (108) and the first hinge portion (146).

7. The aircraft (100) of claim 6, wherein the wing extension (108) comprises a strut (152) connected to the or a second hinge portion (148), and optionally or preferably
i) wherein the wing extension (108) comprises a skin (154) carried by the strut (152), and further optionally or further preferably
ii) wherein the wing extension (108) is a dihedral wing extension; or
the wing extension (108) of claim 2 wherein the wing extension (108) is a dihedral wing extension.

8. The aircraft (100) of claim 1 or the wing extension (108) of claim 2, wherein a shape of the wing extension (108) is complementary to the pylon (156), or
wherein the wing extension (108) is configured to selectively fold to a position at least partially located above the pylon (156); or
wherein the wing extension (108) is configured to selectively fold to a position at least partially located below the pylon (156).

## Patentansprüche

1. Luftfahrzeug (100), umfassend:
einen Flügel (104);
einen Pylon (156), getragen mittels des Flügels (104);
mindestens eines aus einer Rotorsystem- (106) -komponente und einer Antriebssystem- (114) -komponente, angeordnet innerhalb des Pylons (156); und
eine Flügelerweiterung (108), getragen mittels des mindestens einen aus einer Rotorsystem- (106) -komponente und einer Antriebssystem- (114) -komponente;
wobei die Flügelerweiterung (108) faltbar ist relativ zu dem Pylon (156), um selektiv den Gesamtraum zu reduzieren, der von dem Luftfahrzeug (100) eingenommen wird.

2. Flügelerweiterung (108), umfassend:
eine Halterung (142), eingerichtet zur Verbindung mit mindestens einem aus einer Rotorsystem- (106) -komponente und Antriebssystem- (114) -komponente, getragen mittels eines Pylons (156) eines Luftfahrzeugs (100);
einen ersten Scharnierabschnitt (146), verbunden mit der Halterung (142);
einen zweiten Scharnierabschnitt (148), bewegbar verbunden mit dem ersten Scharnierabschnitt (146);
eine Strebe (152), verbunden mit dem zweiten Scharnierabschnitt (148); und
einer Haut (154), getragen mittels der Strebe (152).

3. Luftfahrzeug (100) nach Anspruch 1, wobei der Pylon (156) rotierbar ist relativ zu dem Flügel (104).

4. Luftfahrzeug (100) nach Anspruch 1 oder Anspruch 3, wobei die Flügelerweiterung (108) mit dem mindestens einen aus einer Rotorsystem- (106) -komponente und Antriebssystem- (114) -komponente verbunden ist unter Verwendung einer Halterung (142).

5. Luftfahrzeug (100) nach Anspruch 4, wobei das mindestens eine aus einer Rotorsystem- (106) -komponente und Antriebssystem- (114) -komponente ein Propellergetriebe (144) umfasst; oder
die Flügelerweiterung (108) nach Anspruch 2, wobei das mindestens eine aus einer Rotorsystem- (106) -komponente und Antriebssystem- (114) -komponente ein Propellergetriebe (144) des Luftfahrzeugs (100) umfasst.

6. Luftfahrzeug (100) nach Anspruch 5, wobei ein erster Scharnierabschnitt (146) mit der Halterung (142) verbunden ist und optional oder vorzugsweise wobei ein zweiter Scharnierabschnitt (148) zwischen der Flügelerweiterung (108) und dem ersten Scharnierabschnitt (146) verbunden ist.

7. Luftfahrzeug (100) nach Anspruch 6, wobei die Flügelerweiterung (108) eine Strebe (152) umfasst, die mit dem oder einem zweiten Scharnierabschnitt (148) verbunden ist, und optional oder vorzugsweise
i) wobei die Flügelerweiterung (108) eine Haut (154) umfasst, die mittels der Strebe (152) getragen ist, und weiter optional oder weiter vorzugsweise
ii) wobei die Flügelerweiterung (108) eine V-förmige Flügelerweiterung ist; oder die Flügelerweiterung (108) nach Anspruch 2, wobei die Flügelerweiterung (108) eine V-förmige Flügelerweiterung ist.

8. Luftfahrzeug (100) nach Anspruch 1 oder die Flügelerweiterung (108) nach Anspruch 2, wobei eine Form der Flügelerweiterung (108) komplementär zu dem Pylon (156) ist, oder
wobei die Flügelerweiterung (108) eingerichtet ist, um selektiv in eine Position zu falten, die mindestens teilweise oberhalb des Pylons (156) angeordnet ist; oder
wobei die Flügelerweiterung (108) eingerichtet ist, um selektiv in eine Position zu falten, die mindestens teilweise unterhalb des Pylons (156) angeordnet ist.

## Revendications

1. Aéronef (100), comprenant :
une aile (104) ;
une cheminée (156) portée par l'aile (104) ;
au moins un parmi un composant de système de rotor (106) et un composant de système d'entraînement (114) disposés dans la cheminée (156) ; et
une extension d'aile (108) portée par l'au moins un parmi un composant de système de rotor (106) et un composant de système d'entraînement (114) ;
dans lequel l'extension d'aile (108) est pliable par rapport à la cheminée (156) pour réduire sélectivement un espace global occupé par l'aéronef (100).

2. Extension d'aile (108) comprenant :
un support (142) configuré pour le raccordement à au moins un parmi un composant de système de rotor (106) et un composant de système d'entraînement (114) portés par une cheminée (156) d'un aéronef (100) ;
une première portion d'articulation (146) raccordée au support (142) ;
une seconde portion d'articulation (148) raccordée de manière mobile à la première portion d'articulation (146) ;
une entretoise (152) raccordée à la seconde portion d'articulation (148) ; et
un revêtement (154) porté par l'entretoise (152).

3. Aéronef (100) selon la revendication 1, dans lequel la cheminée (156) peut tourner par rapport à l'aile (104).

4. Aéronef (100) selon la revendication 1 ou la revendication 3, dans lequel l'extension d'aile (108) est raccordée à l'au moins un parmi un composant de système de rotor (106) et un composant de système d'entraînement (114) en utilisant un support (142).

5. Aéronef (100) selon la revendication 4, dans lequel l'au moins un parmi un composant de système de rotor (106) et un composant de système d'entraînement (114) comprend une boîte de vitesses de rotor orientable (144) ; ou
l'extension d'aile (108) selon la revendication 2, dans lequel l'au moins un parmi un composant de système de rotor (106) et un composant de système d'entraînement (114) comprend une boîte de vitesses de rotor orientable (144) de l'aéronef (100).

6. Aéronef (100) selon la revendication 5, dans lequel une première portion d'articulation (146) est raccordée au support (142), et en option ou de préférence dans lequel une seconde portion d'articulation (148) est raccordée entre l'extension d'aile (108) et la première portion d'articulation (146).

7. Aéronef (100) selon la revendication 6, dans lequel l'extension d'aile (108) comprend une entretoise (152) raccordée à la ou une deuxième portion d'articulation (148), et en option ou de préférence
i) dans lequel l'extension d'aile (108) comprend un revêtement (154) porté par l'entretoise (152), et en outre en option ou en outre de préférence
ii) dans lequel l'extension d'aile (108) est une extension d'aile dièdre ; ou
l'extension d'aile (108) selon la revendication 2, dans lequel l'extension d'aile (108) est une extension d'aile dièdre.

8. Aéronef (100) selon la revendication 1 ou extension d'aile (108) selon la revendication 2, dans lequel une forme de l'extension d'aile (108) est complémentaire de la cheminée (156), ou
dans lequel l'extension d'aile (108) est configurée pour plier sélectivement jusqu'à une position au moins partiellement située au-dessus de la cheminée (156) ; ou
dans lequel l'extension d'aile (108) est configurée pour plier sélectivement jusqu'à une position au moins partiellement située sous la cheminée (156).
